# EUROPÄISCHE PATENTANMELDUNG

(11) **EP 2 957 895 A1**
(43) Veröffentlichungstag der Anmeldung: **23.12.2015**
(21) Anmeldenummer: 14172722.2
(22) Anmeldetag: 17.06.2014
(51) Int. Cl.: G01N 21/51

(54) **Streulichtmesssystem mit einer Zentralblende für den Primärstrahl**

(71) Anmelder: Siemens Healthcare Diagnostics Products GmbH, 35041 Marburg (DE)
(72) Erfinder: Die Erfindernennung liegt noch nicht vor
(74) Vertreter: Maier, Daniel Oliver

(57) **Zusammenfassung**

Die Erfindung betrifft ein Streulichtmesssystem mit einer Lichtquelle (13) zur Erzeugung eines Strahlenbündels (12) wobei eine Messzelle (16) optisch untersucht wird. Während Partikel in der Messzelle zur Bildung von Streulicht (27) führen, wird der Primärstrahl des Strahlenbündels (12) durch eine Zentralblende (18) absorbiert. Erfindungsgemäß ist vorgesehen, dass ein Fokuspunkt (15) des Strahlenbündels (12) genau in der Messzelle liegt, was den Vorteil hat, dass die Zentralblende (18) mit einer kleinen Fläche ausgestattet werden kann. Auch die weiteren optischen Komponenten können klein ausgeführt werden, weswegen das Streulichtmesssystem einen geringen Bauraum aufweist. Gleichzeitig können kostengünstige Komponenten verwendet werden. Das Gehäuse (11), in dem die optischen Komponenten untergebracht sind, kann daher beweglich ausgeführt werden, so dass die Messzellen (16) in Aufnahmen (23) ortsfest gelagert werden können.

## Beschreibung

Die Erfindung betrifft ein Streulichtmesssystem mit einer Lichtquelle zur Erzeugung eines Strahlenbündels, mindestens einer Aufnahmevorrichtung für eine Messzelle und einem Photodetektor für von der Messzelle ausgehendes Streulicht. Im Strahlengang des Strahlenbündels ist außerdem vor der Aufnahmevorrichtung eine erste Sammeloptik angeordnet. Im Strahlengang hinter der Aufnahmevorrichtung (also genauer hinter dem Bauraum der Aufnahmevorrichtung für die Messzelle und nach Einbau oder Einsetzen einer Messzelle auch hinter der Messzelle) ist eine Zentralblende für das Licht des ungestreuten Strahlenbündels angeordnet. Im Strahlengang hinter der Zentralblende ist eine Sammeloptik für das Streulicht angeordnet. Das Streulicht ist das durch den Photodetektor zu detektierende Licht, was in der Messzelle ensteht.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z. B. Transferarme mit Greiffunktion, Transportbänder oder drehbare Transporträder, sowie zum Transfer von Flüssigkeiten, wie z. B. Pipettiervorrichtungen. Auch ist es, wie in der DE 10 2009 043 524 A1 beschrieben, möglich, die Messeinrichtung des Analysegerätes beweglich auszuführen, während die Messzellen in ihren Aufnahmevorrichtungen unbeweglich bleiben. Geeignete Geräte umfassen eine Steuereinheit, die mittels entsprechender Software dazu in der Lage ist, die Arbeitsschritte für die gewünschten Analysen weitgehend selbstständig zu planen und abzuarbeiten.

Als Aufnahmevorrichtung im Zusammenhang dieser Erfindung soll eine Einrichtung verstanden werden, die einerseits eine Fixierung der Messzelle erlaubt und andererseits den für die Messzelle erforderlichen Bauraum einschließt. Durch diesen Bauraum, der als Teil der Aufnahmevorrichtung zu verstehen ist, verläuft auch das Strahlenbündel des Messlichtes. Die Messzelle kann auswechselbar oder bleibend in der Aufnahmevorrichtung fixiert sein. Eine bleibende Fixierung ermöglicht auch eine Integration der Messzelle in das Analysegerät (Durchflussmesszelle).

Viele der in derartigen Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen oder Teilchen, in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Insbesondere können moderne Analysegeräte mit einem Streulichtmesssystem ausgestattet sein. Mittels des Streulichtmesssystems lässt sich die Konzentration feinverteilter, kolloidaler Teilchen in Flüssigkeiten oder Gasen quantitativ bestimmen: Wird eine Suspension kleiner Partikel in einen Lichtstrahl verbracht, so wird ein Teil des eingetretenen Lichtes des Strahlenbündels des Lichtstrahls absorbiert, ein anderer Teil, auch als Primärstrahl bezeichnet, verlässt die Suspension ungestreut und wieder ein anderer Teil wird seitlich zum eintretenden Strahl gestreut. Bei der Nephelometrie wird dieses seitlich austretende Streulicht gemessen. Als Strahlenbündel soll im Rahmen dieser Anmeldung auch das Licht eines Laserstahls verstanden werden.

Die Nephelometrie wird vor allem für den quantitativen oder qualitativen Nachweis von Analyten, beispielsweise Proteinen, eingesetzt, die sich bevorzugt mittels einer spezifische Bindungsreaktion zwischen zwei spezifischen Bindungspartnern, z.B. mittels Antigen-Antikörper-Bindung, nachweisen lassen. Bei einem quantitativen Nachweis wird die Menge, die Konzentration oder die Aktivität des Analyten in der Probe gemessen. Von dem Begriff des quantitativen Nachweises sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

Ein Nephelometriesystem umfasst, wie in der DE 198 49 597 A1 beschrieben, üblicherweise mindestens ein Mittel zur Erzeugung eines Strahlenbündels, welches eine Lichtquelle umfasst, und mindestens einen Photodetektor sowie mindestens eine Aufnahmevorrichtung für eine Messzelle. In dieser Bauweise können Lichtquelle, Aufnahmevorrichtung und Photodetektor derart angeordnet sein, dass der Photodetektor das gestreute Licht unter Winkeln oder Winkelbereichen um die Ausbreitungsrichtung des von der Lichtquelle ausgesandten Lichtstrahls erfasst, in denen die Intensität des Streulichts relativ hoch ist. Den Photodetektor erreicht in dieser Geometrie jedoch nicht nur das Streulicht, sondern auch der Primärstrahl. Da jedoch nur der gestreute Teil des Lichtes zum Messergebnis beitragen soll und Licht des Primärstrahls, das auf den Detektor trifft, letztlich nur zu einer Verschlechterung des Signal-Rausch-Abstandes führt, ist für eine Optimierung des Messergebnisses eine möglichst vollständige Ausblendung des Primärstrahls erforderlich. Hierfür wird eine optische Zentralblende eingesetzt. Diese wird mittels dünner Stege im Strahlengang gehalten und hinsichtlich ihrer Größe und Form so angepasst, dass sie einen möglichst großen Teil des Primärstrahls ausblendet, so dass möglichst ausschließlich Streulicht auf den Detektor trifft. Gemäß der DE 36 08 552 A1 können weitere Blenden eingesetzt werden, um das Streulicht noch besser vom Licht des Primärstahls zu trennen.

Die Aufgabe der Erfindung besteht darin, ein Streulichtmesssystem derart fortzubilden, dass ein geringer Aufwand an Komponenten entsteht. Hierdurch soll das Gerät einerseits kostengünstig herstellbar sein und andererseits einen kompakten Aufbau erhalten.

Diese Aufgabe wird mit dem eingangs angegebenen Streulichtmesssystem erfindungsgemäß dadurch gelöst, dass der Fokuspunkt des Strahlenbündels hinter der ersten Sammeloptik in der Messzelle liegt, wenn diese in die Aufnahmevorrichtung eingesetzt ist. Durch Vorsehen des Fokuspunktes in der Messzelle wird vorteilhaft erreicht, dass das Strahlenbündel, was die Messzelle durchtritt, eine verhältnismäßig geringe laterale Ausdehnung hat. Daher ist es vorteilhaft möglich, im Strahlengang hinter der Aufnahmevorrichtung, also hinter der eingesetzen Messzelle, eine Zentralblende vorzusehen, die das ungestreute Strahlenbündel, also den Primärstrahl, absorbiert. Die hierfür erforderliche Blendenfläche ist aufgrund der geringen lateralen Ausdehnung des Strahlenbündels vorteilshaft vergleichsweise gering. Dies ist wichtig, damit in der Messzelle erzeugtes Streulicht mit einem möglichst großen Anteil an der Zentralblende vorbei auf die dahinter befindliche Sammeloptik geleitet werden kann. Je größer nämlich der Anteil des eingefangenen Streulichtes aus der Messzelle ist, desto größer ist der Signal-Rausch-Abstand des Messsignals und damit die Güte des Messergebnisses.

Vorteilhaft kommt das erfindungsgemäße Streulichtmesssystem dabei mit einem Minimum an Komponenten aus. Der Primärstrahl wird durch eine einzige Zentralblende absorbiert. Gemäß einer Ausgestaltung der Erfindung ist dabei vorgesehen, dass die Zentralblende für das ungestreute Strahlenbündel das direkt auf die Aufnahmevorrichtung folgende optische Element im Strahlengang ist. Mit anderen Worten ist zwischen der Aufnahmevorrichtung und der Zentralblende kein weiteres optisches Element angeordnet. Als optische Elemente sind alle diejenigen Elemente zu verstehen, die das Strahlenbündel beeinflussen. Dies können im Allgemeinen Linsen oder andere Optiken, Spiegel und Blenden sein. Weitere optische Elemente können aus Filtern bestehen. Gemäß einer hiervon abweichenden Ausgestaltung der Erfindung ist vorgesehen, dass zwischen der Zentralblende und der Aufnahmevorrichtung keine Licht brechenden Optiken vorgesehen sind. Denkbar wäre aber, dass ein Filter wie zum Beispiel ein Tageslichtfilter zwischen der Aufnahmevorrichtung und der Zentralblende vorgesehen wird.

Gemäß einer besonderen Ausgestaltung der Erfindung ist vorgesehen, dass die erste Sammeloptik und die zweite Sammeloptik jeweils aus einer einzigen Sammellinse bestehen. Hierdurch lässt sich der Aufbau des Streulichtmesssystems vorteilhaft weiter vereinfachen. Die Verwendung jeweils einer einzelnen Sammellinse wird vorteilhaft möglich, da das Streulichtmesssystem aufgrund der Fokussierung des Strahlenbündels in der Messzelle kleine Querschnitte des Strahlenbündels gewährleistet und daher die Linsen mit einem geringen Durchmesser und daher einer befriedigenden optischen Güte auch bei kurzen Brennweiten hergestellt werden können.

Gemäß einer weiteren Ausgestaltung der Erfindung ist vorgesehen, dass der Photodetektor so im Strahlengang angeordnet ist, dass der Durchmesser des Strahlenbündels in der Ebene einer Detektorfläche des Photodetektors einen geringeren Durchmesser als die Abmessungen der Detektorfläche aufweist. Mit anderen Worten ist vorgesehen, dass die Ebene des Photodetektors derart gelegt ist, dass das Streulicht im gewählten Raumwinkelbereich auf der Detektorfläche abgebildet wird. Der gewählte Raumwinkelbereich ergibt sich als Bereich zwischen dem maximalen Winkel, unter dem das Streulicht von der Optik noch eingefangen wird, und dem minimalen Winkel, unter dem das Streulicht an der Blende vorbeifindet. Unter den Abmessungen der Detektorfläche sind deren Ausdehnungen lateral zum Strahlengang zu verstehen. Bei einer runden Detektorfläche ist dies ihr Durchmesser, bei einer quadratischen Detektorfläche ist dies die jeweilige Breite derselben. Vorteilhaft kann das Strahlenbündel so fast vollständig durch den Photodetektor aufgefangen werden kann.

Gemäß einer weiteren Ausgestaltung der Erfindung ist vorgesehen, dass einer der möglichen Fokuspunkte des Streulichtes hinter der zweiten Sammeloptik in der Ebene des Photodetektors liegt. Da der Fokuspunkt des Strahlenbündels in der Messzelle liegt und daher die laterale Ausdehnung des Strahlenbündels in der Messzelle sehr klein ist, kann für die Entstehung des Streulichtes angenommen werden, dass dieses auf der optischen Achse des Strahlenbündels entsteht. Da das Strahlenbündel die Messzelle durchläuft, entstehen abhängig von der Lage von streuenden Teilchen entlang der optischen Achse in der Messzelle hinter der zweiten Sammeloptik Fokuspunkte, die sich in erster Näherung auch auf der optischen Achse befinden. Diese liegen in einem Fokusbereich f, wobei die lichtempfindliche Fläche des Photodetektors innerhalb dieses Bereiches f angeordnet ist. Besonders vorteilhaft ist es, wenn die Sensorfläche des Photodetektors, also die Ebene des Photodetektors, genau in der Mitte des Fokusbereiches f liegt. Mit anderen Worten bedeutet dies, dass der Fokuspunkt des aus der Mitte der Messzelle entstehenden Streulichtes genau in der Ebene des Photodetektors liegt, wobei als Mitte der Messzelle die Hälfte des Weges des Strahlenbündels durch die Messzelle verstanden werden soll.

Gemäß einer weiteren Ausgestaltung der Erfindung ist vorgesehen, dass als Lichtquelle eine LED (Light Emitting Diode) oder eine Laserdiode, insbesondere ein VCSEL (Vertical Cavity Surface Emitting Laser), vorgesehen ist. Hierbei handelt es sich um Lichtquellen, welche kostengünstig in der Beschaffung sind und geringe Abmessungen aufweisen. Außerdem lassen sich diese Bauteile mit für die optische Übertragung hinreichender Genauigkeit mit Hilfe der Elektronikmontage als SMD-Bauteil

(Surface Mounted Device) montieren. Dabei kann als Schaltungsträger ein Gehäuse mit integrierten Leiterbahnen Verwendung finden.

Als Photodetektor können vorteilhaft eine Pin-Photodiode oder eine Avalanche-Photodiode vorgesehen werden. Pin-Photodioden haben den Vorteil, dass diese besonders kostengünstig in der Anschaffung und kompakt in ihren Abmessungen sind. Eine Avalanche-Photodiode ist zwar teurer in der Anschaffung, dafür reagiert sie jedoch besonders empfindlich auf das eintreffende Messlicht. Dies ist von Vorteil, wenn auch geringere Konzentrationen an streuenden Teilchen im Probenmedium nachgewiesen werden sollen.

Gemäß einer bevorzugten Ausgestaltung der Erfindung ist vorgesehen, dass die optischen Elemente mit einer absoluten Lageabweichung von höchstens 0,05 mm angeordnet sind. Hierbei handelt es sich um einen Toleranzbereich, der einerseits mit vertretbarem Fertigungsaufwand eingehalten werden kann. Andererseits genügt diese Lagegenauigkeit, um die optische Funktionszuverlässigkeit des Streulichtmesssystems zu gewährleisten. Bei Einhaltung der genannten Lageabweichungen kann die Blendenfläche der Zentralblende vorteilhaft so gewählt werden, dass der Rand der Zentralblende höchstens 0,25 Millimeter aber mindestens 0,05 mm, bevorzugt 0,1 Millimeter, über den rechnerischen Querschnitt des ungestreuten Strahlenbündels hinausragt. Diese enge Toleranz ist wichtig, damit ein möglichst großer Teil des Streulichtes auf die zweite Linse treffen kann.

Besonders vorteilhaft ist es, wenn in dem Streulichtmesssystem mehrere Aufnahmevorrichtungen auf einem Träger angeordnet sind. Dieser Träger kann beispielsweise eine Scheibe sein, auf der die Aufnahmevorrichtungen auf einem Kreis angeordnet sind. Allerdings ist auch eine lineare Anordnung möglich. Diese kann beispielsweise auf einem Förderband erfolgen. Das Förderband kann dann die mit den Messzellen bestückten Aufnahmevorrichtungen durch das Streulichtmesssystem führen. Bei der Ausführung des Trägers als Scheibe kann diese drehbar angeordnet sein, damit durch Drehung der Scheibe die Messzellen nacheinander durch das Streulichtmesssystem geführt werden können.

Besonders vorteilhaft ist es aber, wenn der Träger ortsfest gelagert ist. Dies hat den Vorteil, dass die Bestückung der Aufnahmevorrichtungen beispielsweise mittels eines Roboterarms einfach erfolgen kann. Dies ist auch möglich, während mit dem Streulichtmesssystem Messungen an Messzellen in anderen Aufnahmevorrichtungen zeitgleich erfolgen. Wenn der Träger ortsfest gelagert ist, müssen die optischen Elemente zur Erzeugung des Strahlenganges in einer Baueinheit zusammengefasst werden, die beweglich ist. Als optische Elemente sind alle die Funktionseinheiten des Streulichtmesssystems zu verstehen, die das Strahlenbündel erzeugen, leiten und das Streulicht registrieren, also die Lichtquelle, der Photodetektor, die erste und die zweite Sammeloptik und die Zentralblende sowie weitere optische Elemente, die im Strahlengang des Strahlenbündels vorgesehen sind. Die Baueinheit kann dann zu den einzelnen Messzellen hin bewegt werden. Da der Strahlengang in der Baueinheit verläuft lässt sich damit die photometrische Untersuchung durchführen. In der Baueinheit ist eine Kavität vorgesehen, in die die Messzelle eingeführt werden kann.

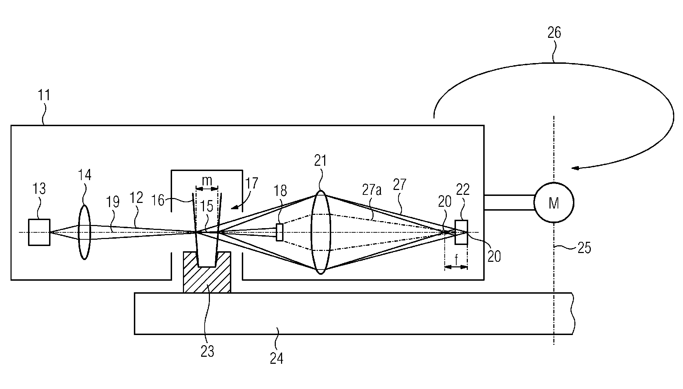

Weitere Einzelheiten der Erfindung werden nachfolgend anhand der Zeichnung beschrieben. Die einzige Figur 1 zeigt ein Ausführungsbeispiel des erfindungsgemäßen Streulichtmesssystems im schematischen Schnitt.

In der Figur dargestellt ist ein Streulichtmesssystem. Dieses weist ein Gehäuse 11 auf, welches eine Baueinheit für die optischen Elemente des Streulichtmesssystems bildet. In dem Gehäuse 11 sind diese optischen Elemente in nicht näher dargestellter Weise befestigt. Ein Strahlenbündel 12 wird von einer Lichtquelle 13 in Form eines VCSEL gebildet und mittels einer ersten Sammeloptik 14 in Form einer Sammellinse so fokussiert, dass der Fokuspunkt 15 in der Mitte einer Messzelle 16 in Form einer runden Küvette liegt, wenn diese eine hierfür vorgesehene Kavität 17 des Gehäuses 11 durchläuft. Im Strahlengang hinter der Messzelle 16 liegt eine Zentralblende 18, die einen um 0,1 mm größeren Radius aufweist, als der Radius des Strahlenbündels des ungestreuten Lichtes in der Ebene der Zentralblende 18. Das ungestreute Strahlenbündel 12 bildet den Primärstrahl, der nicht gemessen werden soll.

In der Messzelle 16 befindet sich eine Probe (nicht näher dargestellt), in dem sich Teilchen befinden können, die das Licht aus dem Strahlenbündel 12 streuen. Das Strahlenbündel durchwandert in der Messzelle 16 eine Wegstrecke m, die den Weg des Lichtes des Strahlenbündels 12 von der einen Wand der Messzelle zur anderen Wand der Messzelle beschreibt. Auf dieser Wegstrecke m liegt der Fokuspunkt des Strahlenbündels 15, im Ausführungsbeispiel gemäß Figur 1 genau in der Mitte der Wegstrecke m.

Exemplarisch ist die Entstehung von Streulicht 27 am Anfang der Wegstrecke m und am Ende der Wegstrecke m dargestellt, wobei die streuenden Teilchen sich genau auf einer optischen Achse 19 des Strahlenbündels 12 befinden. Zu erkennen ist, dass sich in Abhängigkeit von der axialen Lage der streuenden Teilchen auch die Lage von Fokuspunkten 20 auf der optischen Achse 19 in einem Fokusbereich f bewegen können. In Figur 1 dargestellt sind jeweils der erste und letzte Fokuspunkt 20, die den Fokusbereich f in seiner Länge begrenzen. Diese Fokuspunkte stammen von den bereits angesprochenen streuenden Teilchen am Anfang und am Ende der Wegstrecke m.

Die Fokuspunkte im Fokusbereich f werden durch eine zweite Sammeloptik 21 in Form einer Sammellinse erzeugt. In dem Fokusbereich f wird ein Photodetektor 22 angeordnet, im Ausführungsbeispiel gemäß Figur 1 derart, dass die Ebene des Photodetektors genau in der Mitte des Fokusbereiches f liegt. Hierdurch kann gewährleistet werden, dass zumindest der größte Teil des von der zweiten Sammeloptik 21 gesammelten Streulichtes auf die lichtempfindliche Fläche des Photodetektors 22 fällt, auch wenn ein Teil des Streulichtes, wie durch die Strichpunktlinie 27a angedeutet, durch die Blende 18 absorbiert wird.

Die Messzelle 16 wird während der Messung durch eine Aufnahmevorrichtung 23 gehalten, die auf einem Träger 24 in Form einer Scheibe befestigt ist. Auf dieser Scheibe 24 sind weitere Aufnahmevorrichtungen 23 (nicht dargestellt) auf einem Kreis angeordnet. Um nacheinander eine Messung an allen Messzellen durchführen zu können, ist das Gehäuse 11 drehbar gelagert (nicht dargestellt) und mit einem motorischen Antrieb M versehen. Durch den Motor kann das Gehäuse 11 um eine Drehachse 25 entsprechend des angedeuteten Pfeils 26 gedreht werden, wobei die Drehachse 25 der Symmetrieachse des Trägers 24 entspricht. Hierbei können die auf einem Kreis angeordneten Aufnahmevorrichtungen 23 angefahren werden und die in diesen befindlichen Messzellen optisch untersucht werden. Bereits untersuchte Messzellen können während dieses Messvorganges simultan gegen neue ersetzt werden, was vorteilhaft besonders einfach möglich ist, da der Träger 24 ortsfest ist.

### Bezugszeichenliste

- 11: Gehäuse
- 12: Strahlenbündel
- 13: Lichtquelle
- 14: Sammeloptik
- 15: Fokuspunkt
- 16: Messzelle
- 17: Kavität
- 18: Zentralblende
- 19: Achse
- 20: Fokuspunkt
- 21: Sammeloptik
- 22: Photodetektor
- 23: Aufnahmevorrichtung
- 24: Träger
- 25: Drehachse
- 27: Streulicht
- 27a: Strichpunktlinie

- f: Fokusbereich
- m: Wegstrecke
- M: Antrieb

## Patentansprüche

1. Streulichtmesssystem mit einer Lichtquelle (13) zur Erzeugung eines Strahlenbündels (12), mindestens einer Aufnahmevorrichtung (23) für eine Messzelle (16) und einem Photodetektor (22) für von der Messzelle ausgehendes Streulicht, wobei
- im Strahlengang vor der Aufnahmevorrichtung (23) eine erste Sammeloptik (14) angeordnet ist,
- im Strahlengang hinter der Aufnahmevorrichtung (23) eine Zentralblende (18) für das Licht des ungestreuten Strahlenbündels (12) angeordnet ist,
- im Strahlengang hinter der Zentralblende (18) eine zweite Sammeloptik (21) für das Streulicht angeordnet ist,
**dadurch gekennzeichnet, dass** der Fokuspunkt (15) des Strahlenbündels hinter der ersten Sammeloptik (14) innerhalb einer in der Aufnahmevorrichtung (23) eingesetzten Messzelle (16) liegt.

2. Streulichtmesssystem nach Anspruch 1,
**dadurch gekennzeichnet, dass** die erste Sammeloptik (14) und/oder die zweite Sammeloptik (21) jeweils aus einer einzigen Sammellinse bestehen.

3. Streulichtmesssystem nach einem der voranstehenden Ansprüche,
**dadurch gekennzeichnet, dass** die Zentralblende (18) für das ungestreute Strahlenbündel (12) das direkt auf die Aufnahmevorrichtung (23) folgende optische Element ist.

4. Streulichtmesssystem nach einem der voranstehenden Ansprüche,
**dadurch gekennzeichnet, dass** der Photodetektor (22) so im Strahlengang angeordnet ist, dass der Durchmesser des Strahlenbündels (12) in der Ebene einer Detektorfläche des Photodetektors (22) einen geringeren Durchmesser als die Abmessungen der Detektorfläche aufweist.

5. Streulichtmesssystem nach einem der voranstehenden Ansprüche,
**dadurch gekennzeichnet, dass** einer der möglichen Fokuspunkte (20) des Streulichtes hinter der zweiten Sammeloptik (21) in der Ebene des Photodetektors (22) liegt.

6. Streulichtmesssystem nach einem der voranstehenden Ansprüche,
**dadurch gekennzeichnet, dass** als Lichtquelle eine LED oder eine Laserdiode, insbesondere ein VCSEL, vorgesehen ist.

7. Streulichtmesssystem nach einem der voranstehenden Ansprüche,
**dadurch gekennzeichnet, dass** als Photodetektor (22) eine Pin-Photodiode oder eine Avalanche-Photodiode vorgesehen ist.

8. Streulichtmesssystem nach einem der voranstehenden Ansprüche,
**dadurch gekennzeichnet, dass** die im Strahlengang angeordneten optischen Elemente mit einer absoluten Lageabweichung von höchstens 0,05 mm angeordnet sind.

9. Streulichtmesssystem nach einem der voranstehenden Ansprüche,
**dadurch gekennzeichnet, dass** mehrere Aufnahmevorrichtungen (23) auf einem Träger (24) angeordnet sind.

10. Streulichtmesssystem nach Anspruch 9,
**dadurch gekennzeichnet, dass** der Strahlengang in einer Baueinheit (11) verläuft, die zu den auf dem Träger (24) befindlichen Aufnahmevorrichtungen (23) hin bewegt werden kann.
